# EUROPÄISCHE PATENTANMELDUNG

(11) **EP 0 548 568 A1**
(43) Veröffentlichungstag der Anmeldung: **30.06.1993**
(21) Anmeldenummer: 92120005.1
(22) Anmeldetag: 25.11.1992
(51) Int. Cl.: B01D 53/08, B01J 8/12, B01D 46/34

(54) **Verfahren und Vorrichtung zum Reinigen eines gas und/oder dampfförmigen Mediums**

(30) Priorität: 23.12.1991 DE 4142806
(71) Anmelder: H KRANTZ-TKT GmbH, D-51465 Bergisch Gladbach (DE)
(72) Erfinder: Liebich, Thomas, W-5100 Aachen (DE)
(74) Vertreter: Bauer, Hubert, Dipl.-Ing.

(57) **Zusammenfassung**

Zum Reinigen eines gas- und/oder dampfförmigen Mediums werden zwei übereinanderliegende Schüttgutbetten (6, 12) vorgeschlagen, die vom zu reinigenden Medium hintereinander durchströmt werden und innerhalb eines gemeinsamen Gehäuses (1) angeordnet sind. Die Wandergeschwindigkeit des Adsorptionsmittels (2) in beiden Schüttgutbetten (6, 12) ist unabhängig voneinander einstellbar. Das in Anströmrichtung des zu reinigenden Mediums zuerst beaufschlagte untere Schüttgutbett (12) wird von Adsorptionsmittel aus dem oberen Schüttgutbett (6) gespeist. Dazu nicht benötigtes überschüssiges Adsorptionsmittel gelangt aus dem oberen Schüttgutbett (6) separat von dem Adsorptionsmittel, das vom unteren Schüttgutbett (12) abzuziehen ist, zum Austrag.

## Beschreibung

Die Erfindung betrifft ein Verfahren und eine Vorrichtung zum Reinigen eines gas- und/oder dampfförmigen Mediums, das in einem vertikalen Gegenstrom durch eine aus einem fließfähigen Adsorptionsmittel gebildete Schüttgutsäule geleitet wird. Das mit Schadstoffen beladene und infolgedessen verbrauchte Adsorptionsmittel wird im unteren Bereich der Schüttgutsäule abgezogen und durch im oberen Bereich der Schüttgutsäule zufließendes, unverbrauchtes Adsorptionsmittel ersetzt.

Zur Durchführung eines derartigen Verfahrens ist beispielsweise aus der EP 0 411 289 A1 ein Schüttbettfilter bekannt, das aus einem ein Adsorptionsmittel aufnehmenden Behälter besteht, der eine obere Zuführleitung und eine untere Abführleitung für das im Behälterinnern eine Schüttgutsäule bildende Adsorptionsmittel aufweist. Zudem ist der Behälter mit einer unteren Zuführöffnung für das zu reinigende Medium und mit einer oberen Abführöffnung für das gereinigte Medium versehen. Schließlich ist der Behälter durch einen horizontalen Zwischenboden in einen oberen und einen unteren Behälterabschnitt unterteilt.

Schüttbettfilter dieser Bauart weisen den Nachteil auf, daß die Schüttgutsäule über ihre gesamte Höhe nur mit einer gleichen Geschwindigkeit abgesenkt werden kann. Aus der Praxis ist aber bekannt, daß der Verbrauch des Adsorptionsmittels, zum Beispiel Herdofenkoks, zur Rauchgasreinigung infolge seiner Schadstoffbeladung mit einer unterschiedlichen schadstoffspezifischen Geschwindigkeit erfolgt. Weiterhin ist bekannt, daß Schwermetalle, Dioxine, Furane und Kohlenwasserstoffe sehr kurze Massenübergangszonen im Koks besitzen, d. h. sich schon in der unmittelbar ersten Schicht in Strömungsrichtung anlagern, da einerseits der Koks ein gutes Adsorptionsvermögen für diese Stoffe besitzt, andererseits ihre Konzentration im Rauchgas relativ gering ist. Um die Beladefähigkeit des Kokses mit diesen Stoffen voll auszuschöpfen, muß der Koks daher dem Rauchgas eine verhältnismäßig lange Zeit ausgesetzt sein, d. h. eine entsprechende Verweilzeit an der Anströmseite des Schüttbettes besitzen.

Eine hohe Beladung des Adsorptionsmittels ist anzustreben, da der Koks für einige der genannten Stoffe eine Senke in der Rauchgasreinigungskette darstellt und daher der beladene Koks nicht wieder verwendbar ist, sondern entsorgt oder in aufwendiger Weise nachbehandelt werden muß.

Aus Kostengründen wird daher angestrebt, die Mengen des Adsorptionsmittels, in dem sich zum Beispiel Schwermetalle und Dioxine befinden, möglichst klein zu halten. Saure Bestandteile im Rauchgas, wie beispielsweise SO₂ und HCl liegen dagegen in erheblich höheren Konzentrationen im Rauchgas vor als die vorgenannten Stoffe, so daß die maximal mögliche Beladung des Kokses sehr viel schneller erreicht wird.

Bei der herkömmlichen Bauart der Gegenstrom-Aktivkoksreaktoren können die unterschiedlichen Standzeiten der einzelnen Schichten nicht berücksichtigt werden, d. h. die Geschwindigkeit des Schüttgutbettes muß so eingestellt werden, daß der Schadstoff, der das Koksbett am schnellsten sättigt, noch ausreichend adsorbiert wird. Dadurch kann die Beladekapazität des Adsorptionsmittels nicht ausgenutzt werden.

Zur besseren Ausnutzung des Adsorptionsmittels ist aber auch bereits eine mehrstufige Filterung mit Trennung des Adsorptionsmittels in mehrere Fraktionen allgemein bekannt. Dabei lassen sich in einzeln hintereinander geschalteten Reaktoren die Adsorptionsmittelfraktionen unabhängig voneinander nach jeweils verschiedenen Standzeiten austauschen. Derartige Vorrichtungen sind aber außerordentlich aufwendig und erfordern entsprechend hohe Investitionskosten.

Der Erfindung liegt die Aufgabe zugrunde, ein Verfahren der eingangs beschriebenen Art so zu verbessern, daß unter Verzicht auf mehrere Einzelreaktoren gleichwohl eine maximale Anreicherung des Adsorptionsmittels vor seinem Austausch erzielbar ist und die mit unterschiedlichen Schadstoffen angereicherten Adsorptionsmittelfraktionen voneinander getrennt abgezogen werden können.

Zur Lösung dieser Aufgabe wird von einem Verfahren der im Oberbegriff des Anspruchs 1 genannten gattungsgemäßen Art ausgegangen, welches erfindungsgemäß mit den in seinem kennzeichnenden Teil angegebenen Verfahrensschritten durchgeführt wird.

Durch die erfindungsgemäße Unterteilung der Schüttgutsäule in mindestens zwei übereinander angeordnete Schüttgutbetten in Verbindung mit der Aufteilbarkeit des Adsorptionsmittels aus dem oberen Schüttgutbett in einem Adsorptionsmittelteil, mit dem das untere Schüttgutbett erneuert und in einen Adsorptionsmittelteil, der unter Umgehung des unteren Schüttgutbettes abgezogen werden kann, ergibt sich die Möglichkeit, die Adsorptionsmittelmenge in Teilmengen aufzuspalten und die Teilmengen über eine jeweils unterschiedliche schadstoffspezifische Verweildauer dem zu reinigenden Gasstrom auszusetzen und danach getrennt abzuziehen.

Zur Durchführung des Verfahrens kann eine Vorrichtung dienen, wie sie aus der EP 0 411 289 bekannt ist, wobei lediglich der untere Behälterabschnitt durch mindestens einen zweiten durchlässigen horizontalen Zwischenboden in eine obere und eine untere Kammer zu unterteilen ist.

Vorzugsweise sind unter dem eine Decke der oberen Kammer bildenden ersten Zwischenboden Leitbleche angeordnet, die nach unten offene Trichter bilden, durch welche Adsorptionsmittel auf die Fläche des zweiten Zwischenbodens verteilt anhäufbar ist.

Durch die Trichter erfolgt eine in ihrer Höhe vergleichmäßigte Anhäufung des Adsorptionsmittels auf dem zweiten Zwischenboden, so daß nicht nur die Schüttgutdichte in der oberen Kammer des unteren Behälterabschnitts, sondern auch der aus dem Adsorptionsmittel resultierende Strömungswiderstand über den Strömungsquerschnitt entsprechend vergleichmäßigt ist.

Nach einer besonders vorteilhaften Ausgestaltung der Erfindung erstreckt sich der zweite Zwischenboden über eine kleinere Fläche als der Querschnitt des Behälters und ist auf seiner Oberseite mit Randleisten bestückt, die mit Wänden des Behälters Übertrittsspalte zwischen der oberen und der unteren Kammer begrenzen.

Die kleiner als der Behälterquerschnitt ausgebildete Grundfläche des zweiten Zwischenbodens ermöglicht dessen Umströmung mit dem für die Beschickung des unteren Schüttgutbehälters nicht benötigten Adsorptionsmittel, so daß dafür besondere Abführleitungen oder dergleichen außerhalb des Behälters nicht erforderlich sind. Die Randleisten auf der Oberseite des zweiten Zwischenbodens stellen in einfacher Weise sicher, daß auf dem zweiten Zwischenboden eine Mindestbetthöhe nicht unterschritten wird.

Die Trennung des aus dem oberen Schüttgutbett abschließenden und nicht zur Bildung des unteren Schüttgutbettes benötigten Adsorptionsmittels bis zu seinem Abzug aus dem Behälter erfolgt zweckmäßig dadurch, daß an die Unterseite des zweiten Zwischenbodens mindestens einen Trichter bildende Leitbleche angeschlossen sind und jeder Trichter in eine mit einem Absperrorgan versehene Entsorgungsleitung mündet.

Die den Trichter bildenden Leitbleche sind vorzugsweise so angeordnet, daß mit zu diesen im Abstand parallel ausgerichteten Wandteilen des Behälters Abführspalte entstehen, um das aus dem oberen Behälterabschnitt und vom zweiten Zwischenboden seitlich abfließende Adsorptionsmittel einer Entsorgungsleitung zuzuführen.

Zur Durchführung des erfindungsgemäßen Verfahrens kommen also zwei übereinanderliegend angeordnete Schüttgutbetten zum Einsatz, die vom zu reinigenden Medium hintereinander durchströmt werden und innerhalb eines gemeinsamen Gehäuses untergebracht sind. Die Wandergeschwindigkeit des Schüttguts in beiden Betten kann unabhängig voneinander variiert werden, wobei das untere, also in Anströmrichtung zuerst gelegene Schüttgutbett durch Adsorptionsmittel aus dem oberen vom zu reinigenden Gas als zweites durchströmten Schüttgutbett gespeist wird. Das vom oberen Schüttgutbett ausgetragene Adsorptionsmittel wird unter Umgehung des unteren Schüttgutbettes separat ausgetragen, solange das untere Schüttgutbett vollständig mit Adsorptionsmittel aufgefüllt ist.

Für den Austrag des beladenen Adsorptionsmittels ist für jedes der Schüttgutbetten ein vollständig separater Austragweg vorhanden.

Die Überführung des Adsorptionsmittels vom oberen Schüttgutbett in das untere Schüttgutbett erfolgt durch dachförmig ausgerichtete Leitbleche, die vorzugsweise so ausgebildet sind, daß die Verbindungslinie zwischen den Leitblechunterkanten und seitlichen Begrenzungen des unteren Schüttgutbetts durch Randleisten einen Winkel einschließen, der dem Schüttkegelwinkel des Adsorptionsmittels entspricht. An den Leitblechen können senkrechte Ansätze mit Öffnungen versehene Schürzen bilden, um ein ungehindertes Abfließen des unter den Leitblechen austretenden Mediums zu gewährleisten. Mittig über dem unteren Schüttgutbett angeordnete Leitbleche sind vorzugsweise mit längeren Ansätzen versehen als die außenseitig angeordneten Ansätze, um ein unbehindertes Abfließen des Adsorptionsmittels zu ermöglichen.

Größere Vorrichtungen zur Durchführung des Verfahrens können nach dem Prinzip des Einzelmoduls aufgebaut sein, wobei das untere Schüttgutbett in mehrere Teilbetten unterteilt ist, die durch Trichter begrenzt sind. Diese Trichter können durch im unteren Behälterabschnitt eingeschweißte Zwischenbleche gebildet werden.

In der Zeichnung ist ein Ausführungsbeispiel einer Vorrichtung schematisch dargestellt. Darin zeigt:

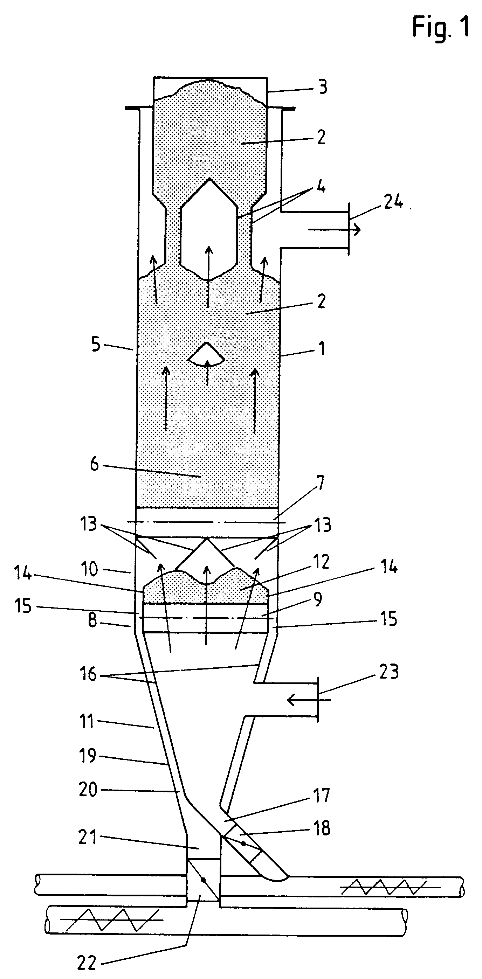

- Fig. 1: einen vertikalen Querschnitt durch die Vorrichtung
und

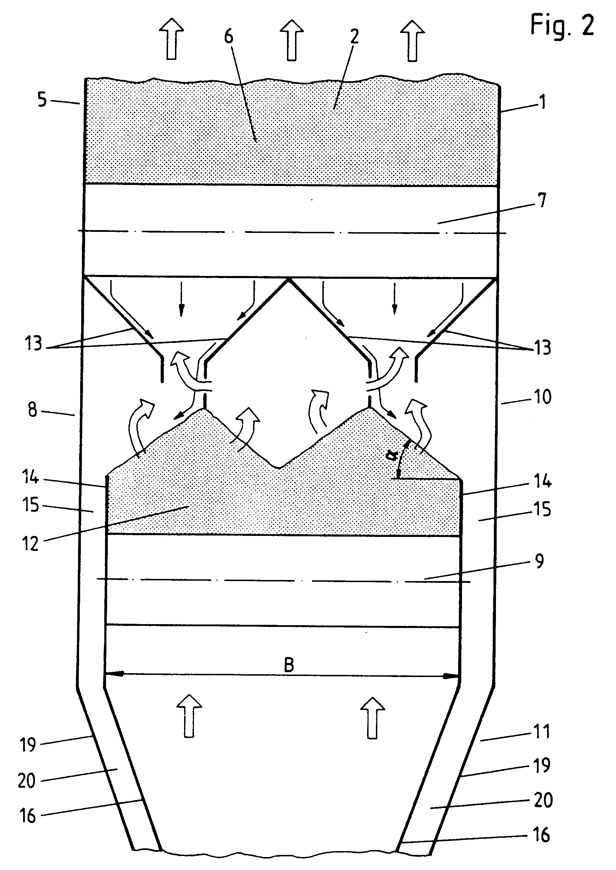

- Fig. 2: einen Teil der Vorrichtung gemäß Fig. 1, jedoch in einem größeren Maßstab.

Die Vorrichtung besteht aus einem Behälter 1, in dessen oberen Bereich ein Adsorptionsmittel 2 enthaltender Silo 3 integriert ist.

Über Zuführleitungen 4 gelangt das Adsorptionsmittel 2 zunächst in einen oberen Behälterabschnitt 5 und bildet darin ein oberes Schüttgutbett 6.

Ein horizontaler Zwischenboden 7, der entsprechend dem aus der EP 0 411 289 A1 bekannten Rost ausgebildet sein kann, trägt das obere Schüttgutbett 6 und begrenzt den oberen Behälterabschnitt 5 nach unten.

Der Zwischenboden 7 trennt den oberen Behälterabschnitt 5 von einem unteren Behälterabschnitt 8. Dieser ist durch einen weiteren Zwischenboden 9, der in seiner Ausbildung dem Zwischenboden 7 entspricht, in eine obere Kammer 10 und eine untere Kammer 11 unterteilt.

Auf dem zweiten Zwischenboden 9 ist ein unteres Schüttgutbett 12 aus Adsorptionsmittel 2 angehäuft, das durch den ersten Zwischenboden 7 über darunter trichterförmig angeordnete Leitbleche 13 auf den zweiten Zwischenboden 9 gelangt.

Die Fläche des zweiten Zwischenbodens 9 ist kleiner als der Querschnitt des Behälters 1 in diesem Bereich.

Auf der Oberseite des zweiten Zwischenbodens 9 sind vertikal ausgerichtete Randleisten 14 angeordnet und bilden mit den Wänden des Behälters 1 Übertrittspalte 15 zwischen der oberen Kammer 10 und der unteren Kammer 11.

An die Unterseite des zweiten Zwischenbodens 9 sind trichterbildende Leitbleche 16 angeschlossen, deren untere Enden an eine Entsorgungsleitung 17 angeschlossen sind, so daß mit Schadstoffen beladenes Adsorptionsmittel 2 durch den zweiten Zwischenboden 9 auf separatem Weg in die Entsorgungsleitung 17 gelangt, die mit einem Absperrorgan 18 versehen ist.

Die Leitbleche 16 sind zu Wandteilen 19 des Behälters 1 in Parallelabständen angeordnet und bilden somit Abführspalte 20, die in eine Entsorgungsleitung 21 münden, welche gleichfalls mit einem Absperrorgan 22 ausgestattet ist.

Über die Abführspalte 20 gelangt ein Teil des Adsorptionsmittels 2, das nicht zur Erneuerung des unteren Schüttgutbettes 12 benötigt wird, auf getrenntem Weg in die Entsorgungsleitung 21.

In vorzugsweise geschlossenem Zustand der Absperrorgane 18 und 22 wird das über eine Zuführöffnung 23 in den Behälter 1 geleitete zu reinigende Medium durch die untere Kammer 11, den durchlässig ausgebildeten zweiten Zwischenboden 9, das untere Schüttgutbett 12 sowie durch den gleichfalls durchlässig ausgebildeten ersten Zwischenboden 7 und durch das obere Schüttgutbett 6 in den oberen Behälterabschnitt 5 geleitet, der mit einer Abführöffnung 24 versehen ist, über welche das Gas im gereinigten Zustand den Behälter 1 verläßt.

## Patentansprüche

1. Verfahren zum Reinigen eines gas- und/oder dampfförmigen Mediums, indem dieses in einem vertikalen Gegenstrom durch eine aus einem fließfähigen Adsorptionsmittel gebildete Schüttgutsäule geleitet wird, wobei das mit Schadstoffen beladene, im unteren Bereich der Schüttgutsäule abgezogene verbrauchte Adsorptionsmittel durch im oberen Bereich der Schüttgutsäule zufließendes unverbrauchtes Adsorptionsmittel ersetzt wird, dadurch gekennzeichnet, daß die Schüttgutsäule mindestens in ein unteres und ein oberes Schüttgutbett unterteilt wird, die Schüttgutbetten nacheinander vom Medium durchströmt werden, das untere Schüttgutbett mit Adsorptionsmittel aus dem oberen Schüttgutbett gespeist wird und verbrauchtes Adsorptionsmittel aus dem unteren Schüttgutbett separat von nicht zur Auffüllung des unteren Schüttgutbettes benötigtem Adsorptionsmittel aus dem oberen Schüttgutbett abgezogen wird.

2. Vorrichtung aus einem ein Adsorptionsmittel aufnehmenden Behälter, der mindestens eine obere Zuführleitung und mindestens eine untere Abführleitung für das im Behälterinnern eine Schüttgutsäule bildende Adsorptionsmittel sowie eine untere Zuführöffnung für das zu reinigende Medium und eine obere Abführöffnung für das gereinigte Medium aufweist, wobei der Behälter durch einen durchlässigen horizontalen Zwischenboden in einen oberen und einen unteren Behälterabschnitt unterteilt ist, zur Durchführung des Verfahrens nach Anspruch 1, dadurch gekennzeichnet, daß der untere Behälterabschnitt (8) durch mindestens einen zweiten durchlässigen horizontalen Zwischenboden (9) in eine obere und eine untere Kammer (10 bzw. 11) unterteilt ist.

3. Vorrichtung nach Anspruch 2, dadurch gekennzeichnet, daß unter dem eine Decke der oberen Kammer (10) bildenden ersten Zwischenboden (7) Leitbleche (13) angeordnet sind, die nach unten offene Trichter bilden, durch welche Adsorptionsmittel (2) auf die Fläche des zweiten Zwischenbodens (9) verteilt anhäufbar ist.

4. Vorrichtung nach Anspruch 2 oder 3, dadurch gekennzeichnet, daß der zweite Zwischenboden (9) sich über eine kleinere Fläche erstreckt als der Querschnitt des Behälters (1) und auf seiner Oberseite mit Randleisten (14) bestückt ist, die mit Wänden des Behälters (1) Übertrittsspalte (15) zwischen der oberen und der unteren Kammer (10 bzw. 11) begrenzen.

5. Vorrichtung nach Anspruch 4, dadurch gekennzeichnet, daß an die Unterseite des zweiten Zwischenbodens (9) mindestens einen Trichter bildende Leitbleche (16) angeschlossen sind und jeder Trichter in eine mit einem Absperrorgan (18) versehene Entsorgungsleitung (17) mündet.

6. Vorrichtung nach Anspruch 5, dadurch gekennzeichnet, daß die den Trichter bildenden Leitbleche (16) mit zu diesen im Abstand parallel ausgerichteten Wandteilen des Behälters (1) Abführspalte (20) für aus dem oberen Behälterabschnitt (5) und vom zweiten Zwischenboden (9) seitlich abfließendes Adsorptionsmittel (2) bilden.

7. Vorrichtung nach Anspruch 6, dadurch gekennzeichnet, daß die Abführspalte (20) in eine zweite mit einem Absperrorgan (22) versehene Entsorgungsleitung (21) münden.
